# DEMANDE DE BREVET EUROPEEN

(11) **EP 0 549 053 A1**
(43) Date de publication de la demande: **30.06.1993**
(21) Numéro de dépôt: 92203950.8
(22) Date de dépôt: 16.12.1992
(51) Int. Cl.: H04L 12/56

(54) **Dispositif de commutation de données**

(30) Priorité: 23.12.1991 FR 9116033
(71) Demandeur: PHILIPS COMMUNICATION D'ENTREPRISE, 75013 Paris (FR); Philips Electronics N.V., 5621 BA Eindhoven (NL)
(72) Inventeur: Laurent, Raymond, Société Civile S.P.I.D., F-75008 Paris (FR)
(74) Mandataire: Chaffraix, Jean

(57) **Abrégé**

Ce dispositif comporte des accès extérieurs (C1, ..., C72) pour être reliés au monde extérieur, des modules de commutations (M1, ..., M9) munis d'accès de commutation (A1, ..., A6, B1, ..., B6), reliés aux accès extérieurs par l'intermédiaire d'un réseau de connexion. Un certain nombre d'accès de connexions (B1 à B6 de M1, M2, M4, M5, M7, M8) des modules est attribué au secours et un réseau de connexions est préétabli pour relier ces accès de secours aux accès extérieurs à dépanner.

## Description

La présente invention concerne un dispositif de commutation de données comportant des accès extérieurs pour être reliés au monde extérieur, des modules de commutations munis d'accès de commutation, reliés aux accès extérieurs par l'intermédiaire d'un réseau de connexion.

Un tel dispositif trouve d'importantes applications pour concentrer ou pour commuter des données provenant de terminaux et de modems.

Une exigence que l'on impose à ce genre de dispositif est une certaine invulnérabilité aux pannes. Ainsi, il faut éviter que la défaillance d'un seul module n'entraîne la mise hors fonctionnement de tout le dispositif et éviter donc de forts désagréments aux abonnés extérieurs rattachés au dispositif.

Dans la demande de brevet internationale WO 90/13957, on décrit un dispositif de ce genre dans lequel il est prévu des mesures pour pallier la défaillance de l'un des modules ; pour cela, lorsqu'un module est déclaré défaillant, on fait appel à un module de remplacement.

Cependant, ce dispositif connu présente un certain nombre d'inconvénients dans cette façon de procéder.
- Il n'est pas sûr que le module de remplacement soit en bon état à sa mise en service.
- Il est nécessaire de prévoir un réseau de connexion pour ce module de secours d'autant plus difficile à établir que la capacité du dispositif de commutation est importante.

Pour remédier à ces inconvénients dans une bonne mesure, la présente invention est remarquable en ce qu'un certain nombre d'accès des modules est attribué au secours et qu'un réseau de connexions est préétabli pour relier ces accès de secours aux accès extérieurs à dépanner.

La description suivante, accompagnée des dessins ci-annexés, le tout donné à titre d'exemple non limitatif, fera bien comprendre comment l'invention peut être réalisée.

la figure 1 montre le schéma d'un dispositif de commutation conforme à l'invention.

La figure 2 montre le schéma d'un module de commutation.

La figure 3 explicite le réseau de connexion.

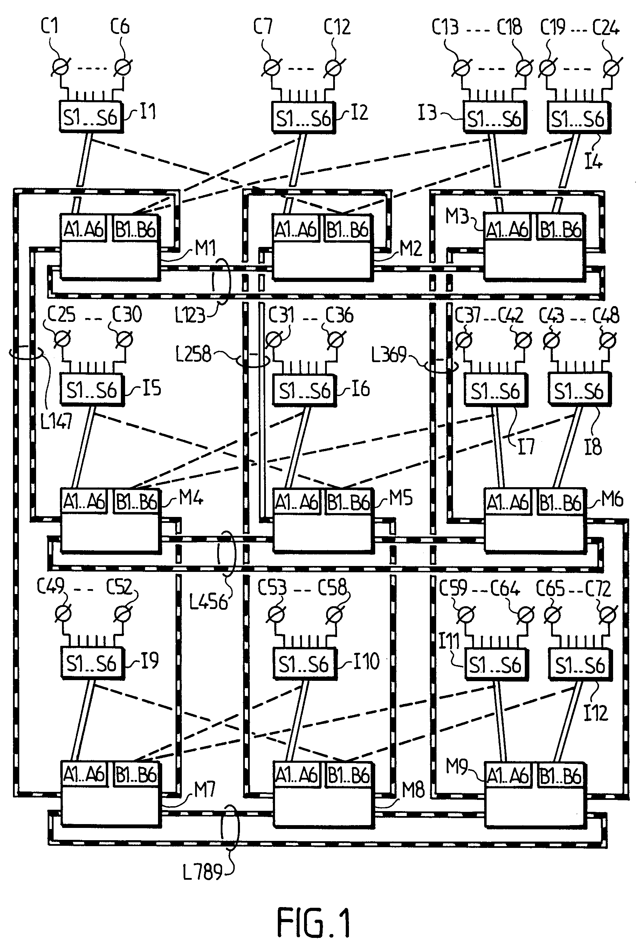

Le dispositif montré à la figure 1 comporte un certain nombre de modules de commutation M1, M2, M3, M4, M5, M6, M7, M8 et M9. Chacun de ces modules comporte deux groupes de six accès de commmutation chacun : A1, ..., A6 pour le premier groupe et B1, ..., B6 pour le second groupe. Ces différents groupes d'accès de commutation sont reliés à des accès extérieurs C1 à C72 par l'intermédiaire de circuits d'interface I1 à I12 qui regroupent chacun 6 accès extérieurs. Ces circuits permettent de raccorder sur les accès de commutation des circuits abonnés de différentes natures (terminaux, modems,...). Les (6) sorties des circuits d'interface sont reliées aux accès de commutation A1, ..., A6, B1, ..., B6 des modules M1 à M9 par l'intermédiaire d'un réseau de connexions montré schématiquement sur cette figure 1 par des tirets et des traits doubles.

Il est à noter que l'échange d'informations entre modules est effectué par des liens.

Ainsi les modules
- M1, M2 et M3: sont interconnectés par le lien L123
- M4, M5 et M6: sont interconnectés par le lien L456
- M7, M8 et M9: sont interconnectés par le lien L789
- M1, M4, M7: sont interconnectés par le lien L147
- M2, M5, M8: sont interconnectés par le lien L258
- M3, M6, M9: sont interconnectés par le lien L369.

Un réseau de connexion relie les six accès de sortie (S1, ..., S6) des circuits aux accès de commutation des modules de commutation. Ce réseau est simplement montré à la figue 1 par des traits doubles et des tirets.

Ainsi selon l'invention, lorsque le dispositif est à son état normal de bon fonctionnement, les sorties
- S1 à S6: du circuit I1 sont reliées aux accès A1 à A6 du module M1,
- S1 à S6: du circuit I2 sont reliées aux accès A1 à A6 du module M2,
- S1 à S6: du circuit I3 sont reliées aux accès A1 à A6 du module M3,
- S1 à S6: du circuit I4 sont reliées aux accès B1 à B6 du module M3,
- S1 à S6: du circuit I5 sont reliées aux accès A1 à A6 du module M4,
- S1 à S6: du circuit I6 sont reliées aux accès A1 à A6 du module M5,
- S1 à S6: du circuit I7 sont reliées aux accès A1 à A6 du module M6,
- S1 à S6: du circuit I8 sont reliées aux accès B1 à B6 du module M6,
- S1 à S6: du circuit I9 sont reliées aux accès A1 à A6 du module M7,
- S1 à S6: du circuit I10 sont reliées aux accès A1 à A6 du module M8,
- S1 à S6: du circuit I11 sont reliées aux accès A1 à A6 du module M9,
- S1 à S6: du circuit I12 sont reliées aux accès B1 à B6 du module M9,
En cas de mauvais fonctionnement, les sorties
- S1 à S6: de I1 peuvent être reliées aux accès B1 à B6 de M2,
- S1 à S6: de I2 peuvent être reliées aux accès B1 à B6 de M1,
- S1 à S6: de I3 peuvent être reliées aux accès B1 à B6 de M1,
- S1 à S6: de I4 peuvent être reliées aux accès B1 à B6 de M2.

D'une manière analogue, il existe des liaisons de secours relativement aux modules M4, M5 et M6 d'une part et M7, M8 et M9 d'autre part.

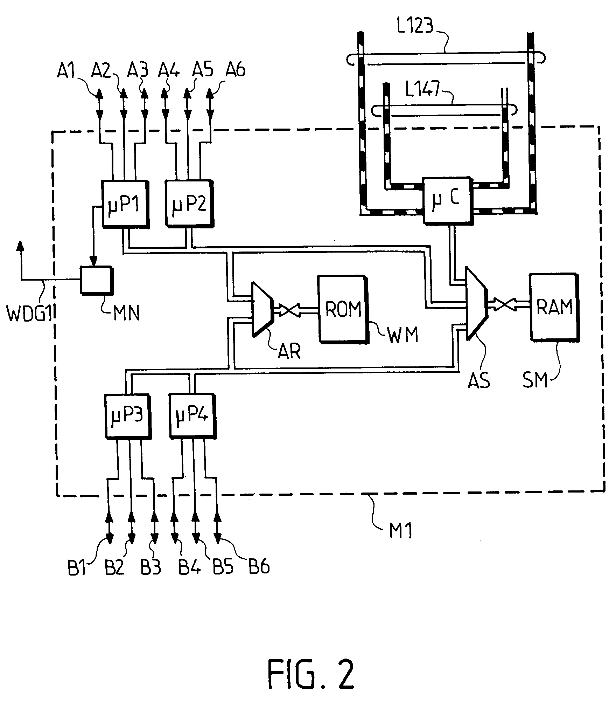

La figure 2 montre plus en détail le schéma du module de commutation M1, la structure des autres modules étant identique. Ce module est formé de 4 microprocesseurs µP1, µP2, µP3 et µP4, groupés en maître-esclave (µP1 et µP3 sont des maîtres et µP2 et µP4 sont leurs esclaves respectifs) ; ces microprocesseurs sont de préférence des 68302 fabriqués par MOTOROLA. Chacun de ces processeurs comporte trois accès de communication qui sont utilisés en tant qu'accès de commutation A1 à A6, B1 à B6. Ainsi les accès A1, A2 et A3 sont rattachés au microprocesseur µP1, A4, A5 et A6 au microprocesseur µP2, les accès B1, B2 et B3 au microprocesseur µP3 et les accès B4, B5 et B6 au microprocesseur µP4. Ces différents microprocesseurs exploitent en commun une mémoire WM. Dans cette mémoire sont inscrits des programmes de fonctionnement qui peuvent, entre autres choses, traiter le routage des différentes données auxdits accès A1, ..., A6, B1, ..., B6. Un circuit d'arbitrage AR autorise l'accès de la mémoire WM pour le couple maître-esclave µP1 et µP2 ou pour le couple µP3 et µP4. Ce circuit d'arbitrage a été décrit dans la demande de brevet français FR 90 11 799 déposée le 25 septembre 1990 au nom de la demanderesse. Les informations à commuter peuvent aussi être dirigées vers d'autres modules M2, ..., M9 par exemple par l'intermédiaire des liens L123 et L147 ; pour cela, on utilise un contrôleur µC du type connu sous le nom de transputer (par exemple T222 fabriqué par INMOS). Une mémoire de commutation SM est utilisée pour permettre l'échange des données entre les microprocesseurs µP1, µP2, µP3, µP4 et µC. Les accès à cette mémoire de commutation commune SM sont réglés par un autre circuit d'arbitrage AS.

Pour détecter le bon fonctionnement du module, le programme contenu dans la mémoire WM contient un programme de test qui consiste à envoyer un signal de bon fonctionnement. Ce logiciel est principalement contrôlé par un microprocesseur maître µP1, qui adresse un monostable réarmable MN dans des périodes de temps toujours inférieures à sa durée de basculement, de sorte qu'à l'état de bon fonctionnement le signal transmis sur un fil WDG1 connecté au module M1 reste à l'état actif tant que le module est en bon état.

Les sorties de ces monostables sont donc reliées à des fils WDG1 à WDG9 relatifs aux modules M1 à M9.

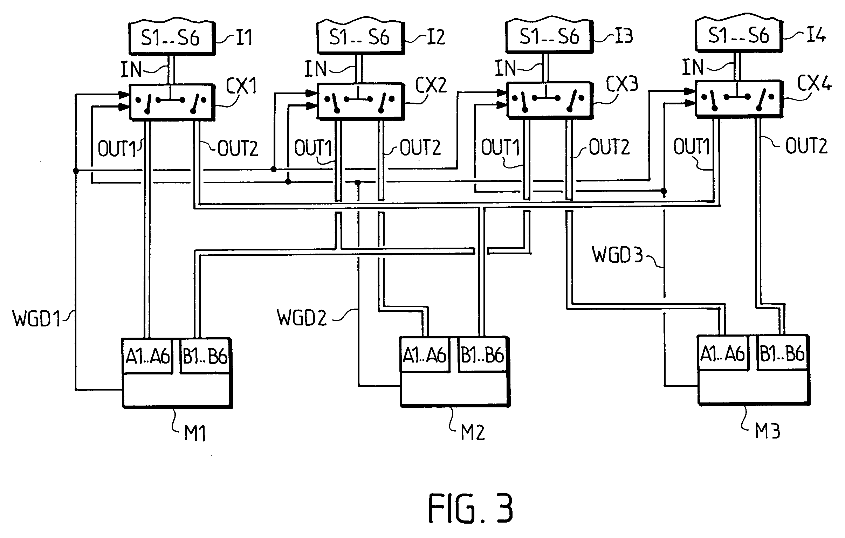

La figure 3 explicite le réseau de connexions. Une seule rangée du dispositif est montrée sur cette figure, les autres rangées se déduisant de celle-ci.

Le réseau de connexions relatif à la rangée comportant les modules M1, M2 et M3 comporte essentiellement 4 circuits de connexion CX1, CX2, CX3 et CX4 rattachés aux circuits d'interface I1, I2, I3 et I4. Ces circuits présentent un accès IN connecté directement aux accès des circuits I1 à I4 et deux accès OUT1 et OUT2. Les connexions effectuées, ces circuits de connexion sont définis par les fils WGD1, WGD2 et WGD3. Les tableaux ci-dessous donnent les connexions établies en fonction des signaux établis par ces circuits sur ces tableaux.
- 0 et 1: signifient respectivement que le signal indiqué est un bon et un mauvais fonctionnement,
- X: signifie la valeur 1 ou 0 indifféremment,
- *: signifie que la sortie est à l'état déconnecté (logique 3 états).

**TABLEAU 1**

| (CX1) | | | |
|---|---|---|---|
| WGD1 | WGD2 | OUT1 | OUT2 |
| 0 | X | I1-M1 | * |
| 1 | 0 | * | I1-M2 |

**TABLEAU 2**

| (CX2) | | | |
|---|---|---|---|
| WGD1 | WGD2 | OUT1 | OUT2 |
| X | O | * | I2-M2 |
| 0 | 1 | I2-M1 | * |

**TABLEAU 3**

| (CX3) | | | |
|---|---|---|---|
| WGD1 | WGD3 | OUT1 | OUT2 |
| X | 0 | * | I3-M3 |
| 0 | 1 | I3-M2 | * |

**TABLEAU 4**

| (CX4) | | | |
|---|---|---|---|
| WGD2 | WGD3 | OUT1 | OUT2 |
| X | 0 | * | I4-M3 |
| 0 | 1 | I4-M2 | * |

- Nota :: Le système est conçu pour secourir un seul module parmi 3 dans une unité logique (M1-M2-M3, M4-M5-M6, M7-M8-M9).

## Revendications

1. Dispositif de commutation de données comportant des accès extérieurs pour être reliés au monde extérieur, des modules de commutations munis d'accès de commutation, reliés aux accès extérieurs par l'intermédiaire d'un réseau de connexions, caractérisé en ce que un certain nombre d'accès de connexions des modules est attribué au secours et que le réseau de connexions est préétabli pour relier ces accès de secours aux accès extérieurs à dépanner.

2. Dispositif de commutation de données selon la revendication 1 dans lequel les modules comportent une sortie pour fournir une information de bon/mauvais état de fonctionnement, caractérisé en ce que cette sortie est reliée aux entrées de commande du réseau de connexions.

3. Dispositif de commutation de données selon la revendication 1 ou 2, caractérisé en ce qu'un certain nombre de modules seulement comporte des accès de secours.
